# FASCICULE DE BREVET EUROPEEN

(11) **EP 1 176 307 B1**
(45) Date de publication et mention de la délivrance du brevet: **21.01.2009**
(21) Numéro de dépôt: 01401980.6
(22) Date de dépôt: 24.07.2001
(51) Int. Cl.: F03G 7/06, F21S 8/00

(54) **Procédé et dispositif d'actionnement par conversion d'énergie thermique en énergie mécanique**
Verfahren und Vorrichtung zur Umwandlung von thermischer in mechanische Energie
Method of and device for actuating by conversion of thermal into mechanical energy

(30) Priorité: 25.07.2000 FR 0009708
(43) Date de publication de la demande: 30.01.2002
(73) Titulaire: Ecollect, 84460 Cheval Blanc (FR)
(72) Inventeur: Gayet, Alain, 92400 Courbevoie (FR); Alamelle, Jean-Marie, 84300 Cavaillon (FR)

(56) Documents cités:
- DE-A- 3 027 750
- DE-A- 3 637 102
- FR-A- 2 684 638
- FR-A- 2 711 949
- US-A- 2 690 050
- US-A- 3 911 680
- US-A- 3 999 790
- US-A- 4 551 978
- US-A- 4 887 430
- US-A- 4 984 542
- BAXTER: "Metal with Memory" ENGINEERING MATERIALS & DESIGN, vol. 24, no. 7, 1 juillet 1980 (1980-07-01), pages 37-39, XP002164953 london
- PATENT ABSTRACTS OF JAPAN vol. 9, no. 326 (M-441) [2049], 21 décembre 1985 (1985-12-21) & JP 60 159378 A (FURUKAWA DENKI), 20 août 1985 (1985-08-20)

## Description

La présente invention se situe dans le domaine de l'éclairage, en particulier dans celui des projecteurs d'éclairage de façades et de monuments et plus précisément pour ceux qui, placés dans des coffres, sont enterrés dans le sol.

Les problèmes avec ces dispositifs apparaissent avec l'ambiguïté de la partie supérieure fermant le coffre qui doit à la fois, protéger les projecteurs, mais aussi laisser passer la lumière quand ceux-ci sont en fonctionnement.

Aussi sont utilisées des techniques comme l'utilisation de verre armée, ou de grilles de protection.

Les verres armés, sont facilement sujets à vandalisme, mais surtout sont facilement salis et maculés entre autre par la terre environnante, ce qui réduit très considérablement la puissance lumineuse émise, voire entraîne une surchauffe du projecteur entraînant un vieillissement accéléré de l'ampoule électrique.

Les grilles présentent le double défaut, d'une part, de leur non-étanchéité permanente et d'autre part, de projeter des ombres disgracieuses sur les façades éclairées.

Le problème est résolu si on dispose sur le coffre contenant le projecteur, un couvercle motorisé s'ouvrant en période d'éclairage et se refermant en période d'extinction. Mais cette solution présente le double défaut d'un surcoût très significatif et d'une fiabilité faible, ce type de matériel n'étant jamais entretenu, à l'exception des changements d'ampoules.

En fait, le problème posé ne peut être effectivement résolu que si on sait résoudre simultanément trois problèmes, c'est-à-dire concevoir un procédé et des installations,
(i) mettant en oeuvre un couvercle mobile,
(ii) ne nécessitant pas d'intervention d'entretien,
(iii) et ne présentant pas de surcoût prohibitif, par rapport au prix de l'équipement de base.

Ces objectifs sont atteints et ces problèmes sont résolus selon l'invention à l'aide d'un procédé comprenant les étapes décrites ci-après et mettant en oeuvre les équipements ad hoc.
(i) le procédé consiste physiquement à capter ou libérer de l'énergie,
(ii) puis à transformer cette énergie en énergie mécanique,
(iii) enfin à utiliser ladite énergie mécanique pour déplacer le couvercle.

Le dispositif, selon l'invention, consiste donc fondamentalement,
(i) à capter ou libérer l'énergie thermique dissipée par le projecteur,
(ii) à transformer cette énergie thermique en énergie mécanique en exploitant les propriétés des matériaux bimétalliques ou des alliages à mémoires de formes,
(iii) à exploiter cette variation d'énergie mécanique pour ouvrir ou fermer le couvercle.

À la différence des alliages à mémoires de formes (SME ou Shape Memory Effect en anglais), les dispositifs utilisant des bilames ont un mouvement mécanique continu et progressif et non des situations bistables. Un parfait exemple de ce type d'application est présenté dans le brevet US n° 4 887 430 de Kroll, Baran, & Mading du 19 décembre 1989 montrant un activateur bistable.

Bien évidemment ce procédé et ce dispositif peuvent être mis en oeuvre pour d'autres applications, en utilisant par exemple une variation anormale de température d'un équipement industriel, aussi bien dans le sens positif que négatif. Les capteurs et autres dispositifs de régulation étant hors services, un tel dispositif, totalement passif, peut alors intervenir, et enclencher une régulation de secours, une alarme, un arrêt, un appel téléphonique, etc.

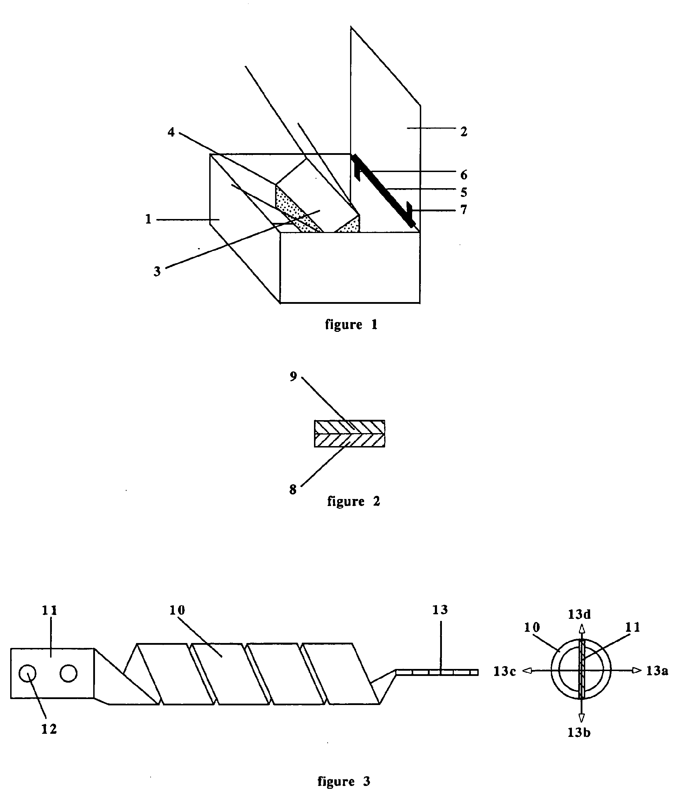

D'autres caractéristiques et avantages de l'invention apparaîtront à la lecture de la description d'une variante de réalisation de l'invention, donnée à titre d'exemple indicatif et non limitatif, et des figures 1 à 3, annexées, présentant des vues schématiques de la mise en oeuvre du procédé selon l'invention.

C'est ainsi que :
- la figure 1 montre, en perspective un coffre avec un projecteur,
- la figure 2 montre, en coupe, un ruban bimétallique,
- la figure 3 montre, un ressort, vue de face, et de coté

Un tel dispositif (figure 1) mettant en oeuvre le procédé selon l'invention est constitué d'un coffre (1) muni d'un couvercle (2) et dans lequel vient se placer un projecteur (3), qui, quand il sera en fonctionnement, projettera de la lumière (4) en direction par exemple d'une façade à éclairer.

Le couvercle (2) est lié avec le coffre (1) au moyen d'une articulation (5) respectivement solidaire du coffre au point (6) et du couvercle au point (7).

Cette articulation (5) est réalisée (figure 2) au moyen d'un ruban bimétallique (8 et 9) constitué de deux matériaux métalliques (8) et (9), présentant un fort écart de leur coefficient de dilatation et intimement liés entre eux par des techniques de soudure ou de laminage.

Ce ruban (8 et 9) est enroulé (figure 3) en spires (10) continues, avec le matériau présentant le plus fort coefficient de dilatation placé à l'extérieur. On constitue ainsi un ressort hélicoïdal dont les extrémités (11) et (13), munies de trous (12), permettent les fixations (6) et (7) respectivement au coffre (1) et au couvercle (2). À une température donnée, ce ressort hélicoïdal (10) voit donc ses extrémités (11 et 13) se présenter dans des positions relatives quelconques.

Pour obtenir le résultat recherché, l'homme de l'art effectuera le choix des matériaux (8) et (9), puis fixera l'épaisseur, la largeur, la longueur développée des spires (10) du ressort, le diamètre retenu en fonction du couple de rappel nécessaire à l'ouverture du couvercle (2), tout en veillant à ne pas contraindre le ressort (10) au-delà de la résistance normale des matériaux.

Quand la température s'accroît, un tel ressort hélicoïdal bimétallique se déroulera en se raccourcissant tout en ayant simultanément un accroissement de son diamètre extérieur. À l'inverse, quand la température décroît, celui-ci, se déroule, s'allonge et se rétrécit en diamètre.

Bien évidement, il convient de régler les extrémités du ressort (10) afin que, l'extrémité (11) fixée, par exemple au coffre (1) au point (6) étant immobilisée, l'extrémité (13) étant considérée comme libre va donc pouvoir occuper, par exemple, la position (13a) à 20°c, la position (13b) à 40°c, la position (13c) à 60°c et la position (13d) à 80°c.

Dans un tel exemple, on voit ainsi, que si le couvercle (2) est en butée sur le coffre (1) à la température ambiante, l'allumage du projecteur libère une énergie thermique significative, communiquée préférentiellement au ressort (10). Sa température monte, il se déroule sur lui-même. Dès qu'il atteint 60°c, le couvercle commence à se soulever et atteint la pleine ouverture à partir de 80°c.

Bien évidemment ces températures sont des exemples et un produit réel devra être élaboré sur mesure, selon les principes évoqués ci-dessus.

On comprend ainsi que la mise en oeuvre de ce procédé constitue une avancée spectaculaire dans le domaine des projecteurs enterrés, permettant en l'absence de toute motorisation, d'avoir néanmoins un couvercle protégeant le coffre, mais libérant toute la puissance lumineuse du projecteur, quand on allume celui-ci.

De manière plus générale, ce procédé permet de réaliser un remarquable dispositif de sécurité passif dans de nombreuses installations industrielles, mais aussi dans les domaines de l'aviation, de l'automobile, de la marine et du bâtiment. Le ressort ou la charnière utilisé dans le cas du coffre et de son couvercle deviennent de véritables actionneurs, susceptibles d'avoir la capacité d'ouvrir et de fermer quelque chose, d'appuyer et de relâcher une commande, etc.

Un tel dispositif, totalement passif, peut alors intervenir en cas de fonctionnement anormal entraînant une variation de température, positive ou négative, et enclencher, d'une manière sure, une opération de sécurisation ou de sauvegarde tel le démarrage d'une régulation de secours ou d'une alarme, voire d'enclencher un dispositif d'arrêt d'urgence.

## Revendications

1. Procédé pour actionner un dispositif susceptible de se déployer entre deux positions en dégageant ou en absorbant de l'énergie thermique lors du passage d'une position à l'autre, ledit procédé comportant les étapes :
(i) de capter et ou de libérer ladite énergie thermique,
(ii) de transformer cette variation d'énergie thermique en énergie mécanique,
(iii) d'appliquer ladite énergie mécanique audit dispositif,
**caractérisé en ce que** ledit procédé est progressif, et met en oeuvre les caractéristiques mécaniques d'un ressort hélicoïdal constitué d'un ruban réalisé en matériau bimétallique et enroulé en spires continues.

2. Dispositif de mise en oeuvre du procédé, selon la revendication 1, permettant à un actionneur (5) de s'ouvrir et de se fermer progressivement, **caractérisé en ce que** l'énergie mécanique nécessaire à son fonctionnement, provient de la variation d'énergie thermique ambiante, mettant en oeuvre les caractéristiques mécaniques d'un ressort hélicoïdal (10) constitué d'un ruban réalisé en matériau bimétallique (8 & 9) et enroulé en spires continues.

3. Dispositif réalisé selon la revendication 2, **caractérisé en ce que** :
(i) la variation d'énergie thermique ambiante provient de celle qui est dégagée par un projecteur lumineux (3) placé dans un coffre (1), entre son état de fonctionnement et son état d'extinction,
(ii) l'actionneur est un couvercle de protection (2) qui s'ouvre ainsi automatiquement quand le projecteur (3) est allumé et se ferme automatiquement une fois celui-ci éteint.

4. Dispositif réalisé selon la revendication 2, **caractérisé en ce que** :
(i) la variation d'énergie thermique ambiante provient du fonctionnement anormal d'un équipement industriel, ce dernier voyant alors sa température évoluer,
(ii) l'actionneur est un composant de sécurité passif, non alimenté, permettant d'enclencher une opération de sécurisation ou de sauvegarde.

## Claims

1. Method for actuating a device that can be deployed between two positions, by releasing or absorbing thermal energy upon passing from one position to the other, said method comprising the following steps:
(i) said thermal energy is captured or released;
(ii) this change in thermal energy is converted into mechanical energy; and
(iii) said mechanical energy is applied to said device,
**characterized in that** said method is progressive and involves the mechanical properties of a helical spring consisting of a strip made of a bimetallic material and wound in continuous turns.

2. Device for implementing the method according to Claim 1, allowing an actuator (5) to progressively open and close, **characterized in that** the mechanical energy needed to operate it comes from the change in ambient thermal energy, using the mechanical properties of a helical spring (10) consisting of a strip made of bimetallic material (8 & 9) and wound in continuous turns.

3. Device produced according to Claim 2, **characterized in that**:
(i) the change in ambient thermal energy comes from that released by a light projector (3) placed in a box (1) between its operating state and its off-state;
(ii) the actuator is a protective lid (2) which thus opens automatically when the projector (3) is turned on and closes automatically once the latter has been turned off.

4. Device produced according to Claim 2, **characterized in that**:
(i) the change in ambient thermal energy comes from the abnormal operation of industrial equipment, the latter then seeing its temperature change; and
(ii) the actuator is an unpowered passive safety component, allowing a safety or safeguarding operation to be triggered.

## Patentansprüche

1. Verfahren zur Betätigung einer Vorrichtung, die sich zwischen zwei Positionen ausbreiten kann, indem sie beim Übergang von einer Position zur anderen Wärmeenergie entwickelt oder absorbiert, wobei das Verfahren die folgenden Schritte aufweist:
(i) die Wärmeenergie aufzunehmen oder freizusetzen,
(ii) diese Wärmeenergieveränderung in mechanische Energie umzuwandeln,
(iii)die mechanische Energie an die Vorrichtung anzuwenden,
**dadurch gekennzeichnet, dass** das Verfahren progressiv ist und die mechanischen Eigenschaften einer Schraubenfeder einsetzt, die aus einem aus Bimetallmaterial hergestellten Band besteht und in durchgehenden Windungen aufgewickelt ist.

2. Vorrichtung zur Anwendung des Verfahrens nach Anspruch 1, die es einem Stellantrieb (5) ermöglicht, sich progressiv zu öffnen und zu schließen, **dadurch gekennzeichnet, dass** die für ihren Betrieb notwendige mechanische Energie von der Veränderung der Umgebungswärmeenergie kommt, die die mechanischen Eigenschaften einer aus Bimetallmaterial (8 & 9) hergestellten und in durchgehenden Windungen aufgewickelten Schraubenfeder (10) verwendet.

3. Vorrichtung, die gemäß Anspruch 2 hergestellt wird, **dadurch gekennzeichnet, dass**:
(i) die Veränderung der Umgebungswärmeenergie von derjenigen kommt, die von einem in einem Gehäuse (1) angeordneten Lichtprojektor (3) zwischen seinem Betriebszustand und seinem ausgeschalteten Zustand abgegeben wird,
(ii) der Stellantrieb ein Schutzdeckel (2) ist, der sich automatisch öffnet, wenn der Projektor (3) eingeschaltet wird, und sich automatisch schließt, wenn dieser ausgeschaltet ist.

4. Vorrichtung, die gemäß Anspruch 2 hergestellt wird, **dadurch gekennzeichnet, dass**:
(i) die Veränderung der Umgebungswärmeenergie vom anormalen Betrieb einer Industrieausrüstung kommt, wobei die Temperatur der letzteren sich dann entwickelt,
(ii) der Stellantrieb ein passives, nicht gespeistes Sicherheitsbauteil ist, das es ermöglicht, einen Sicherungs- oder Schutzvorgang auszulösen.
